# EUROPEAN PATENT APPLICATION

(11) **EP 4 160 777 A1**
(43) Date of publication of application: **05.04.2023**
(21) Application number: 21813387.4
(22) Date of filing: 26.05.2021
(51) Int. Cl.: H01M 10/058, H01M 10/0525

(54) **ANODE PIECE, AND PREPARATION METHOD AND USE THEREFOR IN SEMI-SOLID STATE BATTERY**

(30) Priority: 27.05.2020 CN 202010463408
(71) Applicant: Beijing WeLion New Energy Technology Co., Ltd, Beijing 102402 (CN)
(72) Inventor: LI, Wenjun, Beijing 102402 (CN); WANG, Junying, Beijing 102402 (CN); LI, Jiuming, Beijing 102402 (CN); XU, Hangyu, Beijing 102402 (CN); YU, Huigen, Beijing 102402 (CN)
(74) Representative: Lavoix
(86) International application number: PCT/CN2021/095928
(87) International publication number: WO 2021/238952

(57) **Abstract**

The invention relates to a positive plate for a lithium battery, preparation method thereof and use in semi-solid state battery. The positive plate for a lithium battery comprises a current collector and an active material layer arranged on a surface of the current collector; and the active material layer comprises a positive electrode active material, a conductive agent, a binder, an oxide solid-state electrolyte and a polymer obtained by in-situ polymerization. The oxide solid-state electrolyte and polymer are evenly distributed in the active material layer; wherein the oxide solid-state electrolyte can effectively improve the safety performance of the positive plate; and the polymer obtained by in situ polymerization can effectively improve the contact between the oxide solid-state electrolyte and the material in the positive plate, thereby reducing the impedance of the positive plate and improving the electrochemical performance of the positive plate. The combination of the oxide solid-state electrolyte and polymer in the present application enables the positive plate of the present application to possess excellent electrochemical performance, in addition to excellent safety performance.

## Description

This application claims the priority of the Chinese patent application filed on May 27, 2020 with the application number CN202010463408.8, titled "Cathode Piece, and Preparation Method and Use Therefor in Semi-Solid Battery", which is entirely incorporated herein by reference.

### TECHNICAL FIELD

The present application relates to the technical field of batteries, in particular to a positiveelectrode, a preparation method and use thereof in semi-solid state batteries.

### BACKGROUND ART

As a green and environment-friendly new energy source, lithium-ion batteries have the advantages of good reliability, high safety, small size and light weight. At present, they have been widely used in digital products, electric vehicles, military products and other fields. With the vigorous development of lithium-ion batteries, the current lithium-ion batteries are also being developed in the direction of high life, high safety, high rate and low cost.

In order to improve the energy density of lithium-ion batteries, the prior art often increases the energy density of the battery by using high nickel materials or increasing the voltage of the battery, all of which increase the unsafe factor of the battery. With the gradual increase of nickel content in NCM622, NCM811, and NCA positive electrode materials, the oxidative decomposition temperature of the corresponding materials also gradually decreased, and the reaction between the high-nickel material and the electrolyte under high voltage is more intense. Once a battery assembled from high-nickel materials has an abnormality such as short circuit, overcharge, and over discharge, the temperature of the battery rises sharply, and the battery will experience thermal runaway, which will cause fire and explosion, thereby resulting in safety accidents.

Therefore, while continuously improving the energy density of batteries, the safety of batteries has also received more and more attention and becomes one of the hotspots of current research.

At present, the methods for improving the safety of lithium batteries in the prior art mainly comprise positive electrode material coating, electrolyte additives, PTC coating, insulating/flame-retardant coating, ceramic separator coating, negative electrode material modification, etc. For example:
CN107482164A discloses a lithium ion battery electrode structure and lithium ion battery, the electrode structure comprises a positive electrode current collector, a positive electrode active coating, a ceramic coating and a negative electrode active coating; wherein the positive electrode active coating is coated on two sides of the positive electrode current collector, the ceramic coating is respectively coated on the outside of the two positive active coatings, and the negative active coating is coated on the outside of any one of the ceramic coatings. However, since the thermal runaway of piercing by needle occurs instantaneously, the action mechanism of the ceramic coating is often too late to work, and cannot effectively improve the safety of piercing by needle.
CN110911634A discloses a positive electrode material, a preparation method thereof, a positive electrode for lithium battery and a solid-state lithium battery. The positive electrode material comprises a positive electrode active material and a fluorinated TiS₂ material coated on the positive electrode active material. However, in the case of higher temperature, the method has relatively limited effect on improving the safety of the positive electrode material.

Therefore, there is an urgent need in the art to develop a modification method that can ensure the battery has higher safety performance while maintaining good electrical performance.

### SUMMARY OF THE APPLICATION

In view of the deficiencies of the prior art, the object of the present application is to provide a positive electrode, a preparation method and use thereof in a semi-solid state battery. The positive electrode of the present application has excellent electrochemical performance and high safety.

For achieving the above object, the present application adopts the following technical solutions:
The first object of the present application is to provide a positive electrode for a lithium battery, which comprises a current collector and an active material layer arranged on the surface of the current collector; wherein the active material layer comprises a positive electrode active material, a conductive agent, a binder, an oxide solid state electrolyte, and a polymer obtained by in-situ polymerization.

The oxide solid-state electrolyte and polymer of the present application are evenly distributed in the active material layer; wherein the oxide solid-state electrolyte can effectively improve the safety performance of the positive electrode; and the polymer obtained by in situ polymerization can effectively improve the contact between the oxide solid-state electrolyte and the material in the positive electrode, thereby reducing the impedance of the positive electrode and improving the electrochemical performance of the positive electrode. The combination of the oxide solid-state electrolyte and polymer in the present application enables the positive electrode of the present application to possess excellent electrochemical performance, in addition to excellent safety performance.

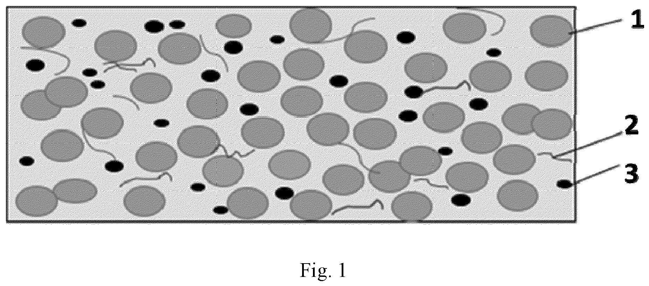

Fig. 1 is a schematic diagram of the distribution of the positive electrode active material, oxide solid state electrolyte and polymer in the active material layer of the positive electrode for a lithium battery according to the present application. In this figure, 1 represents the positive electrode active material; 2 represents the polymer; and 3 represents the oxide solid state electrolyte. It can be seen from the figure that, the oxide solid state electrolyte and polymer are uniformly distributed in the active material layer.

Preferably, the polymer comprises any one or more polymers of polyacrylonitrile, polyvinylene carbonate, polyfluoroethylene carbonate, polyethylene ethylene carbonate, and polyacrylate.

Preferably, the polymer is introduced into the positive electrode by in-situ polymerization process, specifically by infiltrating the positive electrode with a precursor solution for polymerization which comprises a monomer for polymerization, an initiator, a lithium salt and an organic solvent to initiate a polymerization reaction.

Preferably, the initiating manner of the polymerization reaction comprises any one or more of light, heat and radiation.

Preferably, the oxide solid state electrolyte comprises any one or more of NASICON structural material, perovskite structural material, anti-perovskite structural material, LISICON structural material and garnet structural material.

Preferably, the NASICON structural material comprises any one or more of Li₁₊ₐAlₐGe₂₋ₐ(PO₄)₃ or an isomorphous heteroatom doped compound thereof, and Li_{1+b}Al_{b}Ti_{2-b}(PO₄)₃ or an isomorphous heteroatom doped compound thereof; wherein 0≤a≤0.75 (for example, 0.1, 0.2, 0.3, 0.4, 0.5, 0.6, or 0.7, etc.), and 0≤b≤0.5 (for example, 0.1, 0.2, 0.3, or 0.4, etc.).

Preferably, the perovskite structural material comprises any one or more of Li_{3c}La_{2/3-c}TiO₃ or an isomorphous heteroatom doped compound thereof, Li_{3/8}Sr_{7/16}Ta_{3/4}Hf_{1/4}O₃ or an isomorphous heteroatom doped compound thereof, and Li_{2d-e}Sr_{1-d}TaₑZr₁₋ₑO₃ or an isomorphous heteroatom doped compound thereof; wherein 0.06≤c≤0.14 (for example, 0.07, 0.08, 0.09, 0.1, 0.11, 0.12, or 0.13, etc.), 0≤e≤0.75 (for example, 0.1, 0.2, 0.3, 0.4, 0.5, 0.6, or 0.7, etc.), d=0.75e.

Preferably, the anti-perovskite structural material comprises any one or more of Li_{3-2z}M_{z}HalO, Li₃OCl, or an isomorphous heteroatom doped compound thereof; wherein 0≤z≤0.01, M comprises any one or more cations of Mg²⁺, Ca²⁺, Sr²⁺ or Ba²⁺, and Hal is element Cl or I;
the anti-perovskite structural material comprises any one or more of Li_{3-2z}M_{z}HalO, Li₃OCl or an isomorphous heteroatom doped compound thereof, wherein 0≤z≤0.01 (e.g., 0.001, 0.002, 0.003, 0.004, 0.005, 0.006, 0.007, 0.008 or 0.009, etc.), M comprises any one or more cations of Mg²⁺, Ca²⁺, Sr²⁺ or Ba²⁺; and Hal is element Cl or I.

Preferably, the LISICON structural material comprises any one or more of Li_{4-f}Si_{1-f}P_{f}O₄ or an isomorphous heteroatom doped compound thereof, and Li₁₄ZnGe₄O₁₆ or an isomorphous heteroatom doped compound thereof; wherein 0.5≤f ≤0.6 (e.g., 0.51, 0.52, 0.53, 0.54, 0.55, 0.56, 0.57, 0.58, or 0.59, etc.).

Preferably, the garnet structural material comprises Li_{7-g}La₃Zr_{2-g}O₁₂ (LLZO) or an isomorphous heteroatom doped compound thereof, wherein 0≤g≤1 (e.g., 0.1, 0.2, 0.3, 0.4, 0.5, 0.6, 0.7, 0.8, or 0.9, etc.).

In the technical solution of the present application, when LATP or LLTO is selected as the oxide solid state electrolyte, the optimal technical effect can be achieved.

Preferably, the mass of the oxide solid electrolyte is 0.1% to 10%, preferably 1% to 5% of the total mass of the positive electrode active material and the oxide solid electrolyte, such as 0.5%, 1%, 1.5%, 2%, 2.5%, 3%, 3.5%, 4%, 4.5%, 5%, 5.5%, 6%, 6.5%, 7%, 7.5%, 8%, 8.5%, 9% or 9.5%, etc.

The mass of the oxide solid state electrolyte of the present application is 0.1% to 10% of the total mass of the positive electrode active material and the oxide solid state electrolyte. If the content of the oxide solid state electrolyte is too large, the content of the active material is relatively reduced, thereby hindering ion transmission and reducing energy density; if the content of oxide solid state electrolyte is too small, the safety performance cannot be significantly improved, thereby the safety performance of the positive electrode is poor; when the mass of the oxide solid state electrolyte is selected to be 1% to 5% of the mass of the positive active material, the optimal technical effect can be achieved.

The particle size of the oxide solid state electrolyte in the present application is D50=0.1-10 µm, and the particle size of the oxide solid state electrolyte is D50=0.1-10 µm, e.g., 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, or 9.5 µm, etc.; if the particle size is too large, and the isolation effect on the positive active material under the same content is not obvious, and the safety performance of the battery cannot be significantly improved; if the particle size is too small, the interface resistance will increase, and the ion transmission will be blocked. When the particle size of the oxide solid state electrolyte is 0.5-2 µm, the optimal technical effect can be achieved; therefore, preferably the particle size is 0.5-2µm.

Preferably, the positive electrode active material comprises any one or more of LiCoO₂, LiNiO₂, LiMnO₂, LiNi_{0.5}Mn_{1.5}O₄, LiNiₓCo₁₋ₓO₂, LiNiₓCo_{y}Mn_{1-x-y}O₂, LiNiₓCo_{y}Al_{1-x-y}O₂, and a modified compound thereof; wherein 0<x<1 (e.g., 0.1, 0.2, 0.3, 0.4, 0.5, 0.6, 0.7, 0.8, or 0.9, etc.), 0<y<1 (e.g., 0.1, 0.2, 0.3, 0.4, 0.5, 0.6, 0.7, 0.8, or 0.9, etc.), and 0<x+y<1.

Preferably, the positive active material is at least one of LiNiₓCo_{y}Mn_{1-x-y}O₂ and LiNiₓCo_{y}Al_{1-x-y}O₂; wherein 0.6≤x<1 (e.g., 0.65, 0.7, 0.75, 0.8, 0.85, 0.9, or 0.95, etc.), 0<y<0.4 (e.g., 0.05, 0.1, 0.15, 0.2, 0.25, 0.3, or 0.35, etc.), and 0<x+y<1.

The second object of the present application is to provide a method for preparing the positive electrode for a lithium battery as described in the above first object, the method comprises the following steps:
(1) mixing a positive electrode active material, a conductive agent, a binder and an oxide solid electrolyte to make a positive electrode slurry; and mixing a monomer for polymerization, an initiator, a lithium salt and an organic solvent to prepare a precursor solution for polymerization;
(2) coating the positive electrode slurry on a current collector, and drying it to obtain a positive electrode; and
(3) infiltrating the above positive electrode with the precursor solution for polymerization to initiate a polymerization reaction to obtain a positive electrode product.

The monomer for polymerization and initiator in the method of the present application are selected according to the polymer in the target product; the lithium salt and the organic solvent can be selected by those skilled in the art according to actual experience.

The third object of the present application is to provide a semi-solid state battery, which comprises the positive electrode as described in the first object.

The fourth object of the present application is to provide a method for preparing the semi-solid state battery as described in the third object, wherein the method comprises the following steps:
(1) mixing a positive electrode active material, a conductive agent, a binder and an oxide solid electrolyte to make a positive electrode slurry; and mixing a monomer for polymerization, an initiator, a lithium salt and an organic solvent to prepare a precursor solution for polymerization;
(2) coating the positive electrode slurry on a current collector, and drying it to obtain a positive electrode; and
(3) assembling the positive electrode, a negative plate and a separator, and then injecting the precursor solution for polymerization and an electrolyte to infiltrate the positive electrode to initiate a polymerization reaction, thereby obtaining a semi-solid state battery.

In the present application, the precursor solution for polymerization is injected into the battery, and the semi-solid state battery is obtained by in-situ polymerization in the battery. By this method, the precursor solution for polymerization can fully infiltrate the positive electrode, so that the electrolyte and the electrode material can form a good interface contact to reduce the interface impedance; meanwhile, the design of this semi-solid state battery can improve the liquid retention rate of the positive electrode, and improve the energy density and cycle performance of the battery.

Compared with the prior art, the present application has the following beneficial effects:
The oxide solid-state electrolyte and polymer are evenly distributed in the active material layer; wherein the oxide solid-state electrolyte can effectively improve the safety performance of the positive electrode; and the polymer obtained by in situ polymerization can effectively improve the contact between the oxide solid-state electrolyte and the material in the positive electrode, thereby reducing the impedance of the positive electrode and improving the electrochemical performance of the positive electrode. The combination of the oxide solid-state electrolyte and polymer in the present application enables the positive electrode of the present application to possess excellent electrochemical performance, in addition to excellent safety performance.

### BRIEF DESCRIPTION OF THE DRAWINGS

Fig. 1 is a schematic diagram of the distribution of the positive electrode active material, oxide solid state electrolyte and polymer in the active material layer of the positive electrode for a lithium battery according to the present application; in this figure, 1 represents the positive electrode active material; 2 represents the polymer; and 3 represents the oxide solid state electrolyte;
Fig. 2 is a first-cycle charge-discharge curve of the semi-solid state battery provided by Example 1 of the present application;
Fig. 3 is a cycle efficiency curve of the semi-solid state battery provided by Example 1 of the present application.

### SPECIFIC EMBODIMENTS

In order to facilitate the understanding of the present application, Examples of the present application are provided as follows. It should be understood by those skilled in the art that the Examples are only for understanding the present application, and should not be regarded as a specific limitation to the present application. The active material in the silicon carbon anode described in the Examples and Comparative Examples of the present application is the SL450A-SOC nano-silicon carbon anode material of Liyang Tianmu Pioneer Battery Material Technology Co., Ltd.

### Example 1

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder SBR: conductive agent SP is 98:1.5:0.5) and separator were laminated, assembled and baked; pentaerythritol tetraacrylate monomer, initiator AIBN and electrolyte (1mol/L LiPF₆-EC/DEC (volume ratio, 3:7) + 2wt% VC + 1wt% LiDFOB) were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

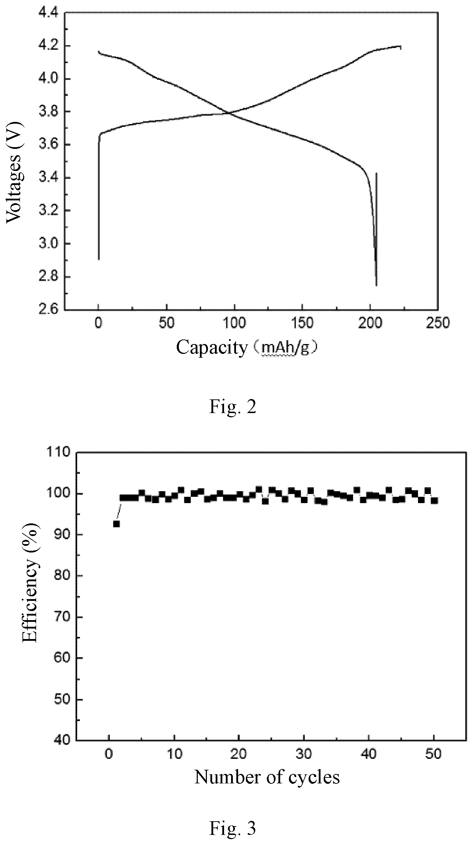

Fig. 2 is a first-cycle charge-discharge curve of the semi-solid state battery provided by Example 1; and Fig. 3 is a cycle efficiency curve (retention rate curve of cycle capacity) of the semi-solid state battery provided by Example 1. It can be seen from Figs. 2-3 that, the semi-solid state battery of Example 1 has excellent electrochemical performance.

### Example 2

The positive active material Ni83 (Li[Ni_{0.83}Co_{0.12}Mn_{0.05}]O₂) and LAGP (particle size: 2 µm, Li_{1.5}Al_{0.5}Ge_{1.5}(PO₄)₃) were fed in a mass ratio of 95:5, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; vinylene carbonate, acrylonitrile monomer, electrolyte (1mol/L LiPF₆-EC/DEC (volume ratio, 3:7) + 2wt% VC + 1wt% LiDFOB) and initiator AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising vinylene carbonate-acrylonitrile copolymer, and a semi-solid state battery.

The semi-solid state battery was subjected to the formation and capacity grading process to make an Ah-level battery for testing. The test results are shown in Table 1.

### Example 3

The positive active material Ni83 (Li[Ni_{0.83}Co_{0.12}Mn_{0.05}]O₂) and LLZO (particle size: 1 µm, Li₇La₃Zr₂O₁₂) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; 1,3-dioxolane (DOL) and the electrolyte (1mol/L LiPF₆-EC/DEC (volume ratio 3:7) + 2wt% VC + 1wt% LiDFOB) were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising vinylene carbonate-acrylonitrile copolymer, and a semi-solid state battery.

The semi-solid state battery was subjected to the formation and capacity grading process to make an Ah-level battery for testing. The test results are shown in Table 1.

### Example 4

The positive active material NCA (LiNi_{0.8}Co_{0.15}Al_{0.05}O₂) and LATP (particle size: 1 µm, Li_{1.2}Al_{0.2}Ti_{1.8}(PO₄)₃) were fed in a mass ratio of 95:5, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; vinylene carbonate monomer and electrolyte (1mol/L LiPF₆-EC/DEC (volume ratio, 3:7) + 2wt% VC + 1wt% LiDFOB), initiator AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 5

The positive active material NCA (LiNi_{0.8}Co_{0.15}Al_{0.05}O₂) and LLZO (particle size: 1 µm, Li_{6.5}La₃Zr_{1.4}Ta_{0.6}O₁₂) were fed in a mass ratio of 95:5, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; methyl methacrylate monomer and electrolyte (1mol/L LiPF₆-EC/DEC (volume ratio, 3:7) + 2wt% VC + 1wt% LiDFOB), initiator AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 6

The positive active material Ni83 (Li[Ni_{0.83}Co_{0.12}Mn_{0.05}]O₂) and LLTO (particle size: 1µm, Li_{0.33}La_{0.56}TiO₃) were fed in a mass ratio of 95:5, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; trimethylolpropane triglycidyl ether monomer and electrolyte (1mol/L LiPF₆-EC/DEC (volume ratio, 3:7) + 2wt% VC + 1wt% LiDFOB) were mixed evenly and injected into the assembled batteries, then packaging and standing at room temperature for 24 h to obtain a positive electrode comprising a polymer, and a semi-solid state battery.

The semi-solid state battery was subjected to the formation and capacity grading process to make an Ah-level battery for testing. The test results are shown in Table 1.

### Example 7

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 99.9:0.1, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 8

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 99:1, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 9

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 95:5, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 10

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 90:10, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 11

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 99.95:0.05, pre-mixing for 1 h in advance at 2500rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 12

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 88:12, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 13

The positive active material Ni88 (Li[Ni_{0.88}Co_{0.02}Mn_{0.1}]O₂) and LATP (particle size: 0.1 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 14

The positive active material Ni88 (Li[Ni_{0.88}Co_{0.02}Mn_{0.1}]O₂) and LATP (particle size: 0.5 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 15

The positive active material Ni88 (Li[Ni_{0.88}Co_{0.02}Mn_{0.1}]O₂) and LATP (particle size: 2 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 16

The positive active material Ni88 (Li[Ni_{0.88}Co_{0.02}Mn_{0.1}]O₂) and LATP (particle size: 10 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 17

The positive active material Ni88 (Li[Ni_{0.88}Co_{0.02}Mn_{0.1}]O₂) and LATP (particle size: 0.05 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 18

The positive active material Ni88 (Li[Ni_{0.88}Co_{0.02}Mn_{0.1}]O₂) and LATP (particle size: 12 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 19

The positive active material Ni88 (Li[Ni_{0.88}Co_{0.02}Mn_{0.1}]O₂) and LSTH (particle size: 1µm, Li_{3/8}Sr_{7/16}Ta_{3/4}Hf_{1/4}O₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Example 20

The positive active material Ni88 (Li[Ni_{0.88}Co_{0.02}Mn_{0.1}]O₂) and LATP (particle size: 12 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The methoxy polyethylene glycol methacrylate (MPEGM) monomer, electrolyte (1mol/L LiPF₆-EC/DEC (volume ratio, 3:7) + 2wt% VC + 1wt% LiDFOB) and photoinitiator (benzoin dimethyl ether, DMPA) was mixed uniformly to make precursor solution for polymerization.

The positive electrode was immersed in the precursor solution for polymerization, irradiating the positive electrode with an ultraviolet lamp after complete infiltration to complete the polymerization reaction.

The positive electrode after polymerization, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) was injected into the assembled batteries, then packaging and infiltrating for 12 h to make the electrolyte fully infiltrate the positive electrode to obtain a semi-solid state battery.

The semi-solid state battery was subjected to the formation and capacity grading process to make an Ah-level battery for testing. The test results are shown in Table 1.

### Comparative Example 1

The positive active material Ni88 (Li[Ni_{0.88}Co_{0.02}Mn_{0.1}]O₂) and LATP (particle size: 1 µm, Li_{1.2}Al_{0.2}Ti_{1.8}(PO₄)₃) were fed in a mass ratio of 98:2, pre-mixing for 1 h in advance at 2500 rpm; glue (NMP+PVDF) was added to the pre-mixed material to mix evenly, then adding conductive agent (SP) to make a positive electrode slurry; in the positive electrode slurry, the mass ratio of positive active material: PVDF: SP is 98:1:1.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; electrolyte (1mol/L LiPF₆-EC/DEC (volume ratio, 3:7) + 2wt% VC + 1wt% LiDFOB) was injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Comparative Example 2

The positive active material Ni88 (Li[Ni_{0.88}Co_{0.02}Mn_{0.1}]O₂), glue solution (NMP+PVDF) and conductive agent (SP) are mixed evenly in a mass ratio of 98:1:1 at 2500 rpm to make a positive electrode slurry.

The positive electrode slurry was evenly coated on the aluminum foil, and after drying, cold pressing and tableting were performed to obtain a positive electrode.

The positive electrode, silicon carbon negative plate (the mass ratio of active material: binder: conductive agent is 98:1.5:0.5) and separator were laminated, assembled and baked; pentaerythritol tetraacrylate monomer, electrolyte (1mol/L LiPF₆-EC/DEC (volume ratio, 3:7) + 2wt% VC + 1wt% LiDFOB) and AIBN were mixed evenly and injected into the assembled batteries, then packaging and infiltrating for 12 h to make the electrolyte fully infiltrate the positive electrode, and then the resulting battery was heated and cured at 60°C for 12 h to obtain a positive electrode comprising a polymer, and a semi-solid state battery.

The semi-solid state battery was subjected to the formation and capacity grading process to make an Ah-level battery for testing. The test results are shown in Table 1.

### Performance Testing:

The semi-solid batteries obtained from each Example and Comparative Example were subjected to the following performance tests:
(1) Energy density: 4Ah batteries were tested for energy density under 25±2°C environment.
(2) Capacity retention rate: 4Ah batteries were tested for capacity retention rate after 200 cycles under 60±2°C environment.
(3) Piercing with needle: the battery was fully charged, and a ϕ5mm high-temperature resistant steel needle was used to penetrate at a rate of (40±5) mm/s from the direction perpendicular to the battery plate; the penetration position should be close to the geometric center of the punctured surface, and the steel needle stayed in the battery to observe for one hour; if the battery doe not catch fire and does not explode, it will pass; if it catches fire and does not explode, it will not pass; and the surface temperature of the passing battery was recorded.
(4) Heating: after the battery was fully charged, it was put into the test chamber, and the test chamber was heated at a heating rate of 5°C/min; when the temperature in the chamber reached (180±2)°C, the temperature was kept constant for 30 min.

After the battery was fully charged, it was put into the test chamber, and the test chamber was heated at a heating rate of 5°C/min; when the temperature in the chamber reached (200±2)°C, the temperature was kept constant for 30 min.

During the heating experiment, if the battery does not catch fire and does not explode, it will pass; and if it catches fire and does not explode, it will not pass.
(5) Squeezing: after the battery was fully charged, it was placed between two planes, and squeezed from the direction perpendicular to the battery plate at a rate of 2mm/s; the squeezing was stopped when the voltage reached 0V or the battery deformation reached 50%; during the squeezing process, if the battery does not catch fire and does not explode, it will pass; and if it catches fire and does not explode, it will not pass; and the surface temperature of the passing battery was recorded.

The test results are shown in Table 1:

**Table 1**

| | Energy density (Wh/kg) | Capacity retention ratio | Piercing with needle | Heating at 180 °C | Heating at 200 °C | 50% deformation, squeezing |
|---|---|---|---|---|---|---|
| Example 1 | 300 | 91.5% | Pass/70°C | Pass | Pass | Pass/50°C |
| Example 2 | 282 | 90.9% | Pass/62°C | Pass | Pass | Pass/45°C |
| Example 3 | 289 | 90.3% | Pass/66°C | Pass | Pass | Pass/47°C |
| Example 4 | 262 | 90.5% | Pass/60°C | Pass | Pass | Pass/40°C |
| Example 5 | 260 | 90.7% | Pass/60°C | Pass | Pass | Pass/40°C |
| Example 6 | 280 | 91.1% | Pass/64°C | Pass | Pass | Pass/47°C |
| Example 7 | 307 | 92.0% | Pass/76°C | Pass | Pass | Pass/59°C |
| Example 8 | 303 | 91.3% | Pass/70°C | Pass | Pass | Pass/50°C |
| Example 9 | 296 | 90.7% | Pass/65°C | Pass | Pass | Pass/48°C |
| Example 10 | 287 | 90.1% | Pass/60°C | Pass | Pass | Pass/43°C |
| Example 11 | 309 | 92.0% | No pass | No pass | No pass | No pass |
| Example 12 | 275 | 88.9% | Pass/60°C | Pass | Pass | Pass/40°C |
| Example 13 | 291 | 90.1% | Pass/65°C | Pass | Pass | Pass/47°C |
| Example 14 | 295 | 90.7% | Pass/65°C | Pass | Pass | Pass/50°C |
| Example 15 | 303 | 91.5% | Pass/72°C | Pass | Pass | Pass/56°C |
| Example 16 | 303 | 90.8% | Pass/80°C | Pass | Pass | Pass/69°C |
| Example 17 | 280 | 88.7% | Pass/68°C | Pass | Pass | Pass/48°C |
| Example 18 | 305 | 89.4% | No pass | No pass | No pass | Pass/65°C |
| Example 19 | 282 | 88.3% | Pass/75°C | Pass | Pass | Pass/60°C |
| Example 20 | 295 | 90.8% | Pass/75°C | Pass | Pass | Pass/58°C |
| Comparative Example 1 | 280 | 88.0% | Pass/80°C | Pass | No pass | Pass/70°C |
| Comparative Example 2 | 312 | 91.7% | No pass | No pass | No pass | No pass |

It can be seen from the comparison between Example 1 and Examples 7-12 that, excessive content of the solid state electrolyte is not conducive to the performance of the battery capacity, and the energy density of Example 12 is only 275Wh/kg; too small content of the solid state electrolyte does not significantly improve the safety of the battery, it is manifested that the battery of Example 11 cannot pass safety tests such as piercing by needle, heating and squeezing; when the content of the solid state electrolyte is 1% to 5%, the battery has high energy density and high safety.

It can be seen from the comparison between Example 1 and Examples 13-18 that, excessive size of the particles of the solid state electrolyte does not significantly improve the safety of the battery, it is manifested that the battery of Example 18 cannot pass safety tests of piercing by needle and heating; too small size of the particles of the solid state electrolyte significantly decreases energy density, and the energy density of Example 17 is only 280Wh /kg; when the particle size is 0.5-2 µm, the battery has high energy density and high safety.

It can be seen from the comparison between Example 1 and Example 19 that, compared with the battery added with LATP, the battery added with LSTH has lower energy density. Although the battery can pass the safety test, the surface temperature of the battery is significantly higher than that of Example 1.

It can be seen from the comparison between Example 1 and Comparative Example 1 that, after adding the polymer obtained by in-situ polymerization, since the interface between the active material and the oxide solid state electrolyte is improved, and the ion transport performance is increased, thereby improving the energy density of the battery; and the liquid retention rate of the battery is also improved, thereby delaying the capacity loss caused by electrolyte consumption and improving cycle performance of the battery; in addition, the polymer has a high decomposition temperature, and it plays a certain endothermic role in the positive electrode. Although the battery of Comparative Example 1 can pass 180°C heating box, but cannot pass 200°C heating box.

It can be seen from the comparison between Example 1 and Comparative Example 2 that, without addition of oxide solid state electrolyte, although the energy density of the battery is high, the safety is poor, and cannot pass safety tests such as piercing by needle, heating and squeezing.

The above are only the preferred embodiments of the present application. It should be pointed out that for those skilled in the art, without departing from the spirit of the present application, several improvements and modifications can be made, and they should be regarded as falling in the protection scope of the present application.

## Claims

1. A positive electrode for a lithium battery, **characterized in that** the positive electrode for a lithium battery comprises a current collector and an active material layer arranged on the surface of the current collector; and
the active material layer comprises a positive electrode active material, a conductive agent, a binder, an oxide solid state electrolyte, and a polymer obtained by in-situ polymerization.

2. The positive electrode for a lithium battery according to claim 1, **characterized in that** the polymer comprises any one or more polymers of polyacrylonitrile, polyvinylene carbonate, polyfluoroethylene carbonate, polyethylene ethylene carbonate, and polyacrylate.

3. The positive electrode for a lithium battery according to claim 1 or 2, **characterized in that** the polymer is introduced into the positive electrode by in-situ polymerization process, specifically by infiltrating the positive electrode with a precursor solution for polymerization which comprises a monomer for polymerization, an initiator, a lithium salt and an organic solvent to initiate a polymerization reaction;
preferably, the initiating manner of the polymerization reaction comprises any one or more of light, heat and radiation.

4. The positive electrode for a lithium battery according to any one of claims 1-3, **characterized in that** the oxide solid state electrolyte comprises any one or more of NASICON structural material, perovskite structural material, anti-perovskite structural material, LISICON structural material and garnet structural material;
preferably, the NASICON structural material comprises any one or more of Li₁₊ₐAlₐGe₂₋ₐ(PO₄)₃ or an isomorphous heteroatom doped compound thereof, and Li_{1+b}Al_{b}Ti_{2-b}(PO₄)₃ or an isomorphous heteroatom doped compound thereof; wherein 0≤a≤0.75, and 0≤b≤0.5;
preferably, the perovskite structural material comprises any one or more of Li_{3c}La_{2/3-c}TiO₃ or an isomorphous heteroatom doped compound thereof, Li_{3/8}Sr_{7/16}Ta_{3/4}Hf_{1/4}O₃ or an isomorphous heteroatom doped compound thereof, and Li_{2d-e}Sr_{1-d}TaₑZr₁₋ₑO₃ or an isomorphous heteroatom doped compound thereof; wherein 0.06≤c≤0.14, 0≤e≤0.75, and d=0.75e;
preferably, the anti-perovskite structural material comprises any one or more of Li_{3-2z}M_{z}HalO, Li₃OCl, or an isomorphous heteroatom doped compound thereof; wherein 0≤z≤0.01, M comprises any one or more cations of Mg²⁺, Ca²⁺, Sr²⁺ or Ba²⁺, and Hal is element Cl or I;
preferably, the LISICON structural material comprises any one or more of Li_{4-f}Si_{1-f}P_{f}O₄ or an isomorphous heteroatom doped compound thereof, and Li₁₄ZnGe₄O₁₆ or an isomorphous heteroatom doped compound thereof; wherein 0.5≤f ≤0.6;
preferably, the garnet structural material comprises Li_{7-g}La₃Zr_{2-g}O₁₂ or an isomorphous heteroatom doped compound thereof; wherein 0≤g≤1.

5. The positive electrode for a lithium battery according to any one of claims 1-4, **characterized in that** the mass of the oxide solid state electrolyte is 0.1% to 10%, preferably 1% to 5% of the total mass of the positive electrode active material and the oxide solid state electrolyte.

6. The positive electrode for a lithium battery according to any one of claims 1-5, **characterized in that** the particle size of the oxide solid state electrolyte is D50=0.1-10 µm, preferably 0.5-2 µm.

7. The positive electrode for a lithium battery according to any one of claims 1-6, **characterized in that** the positive electrode active material comprises any one or more of LiCoO₂, LiNiO₂, LiMnO₂, LiNi_{0.5}Mn_{1.5}O₄, LiNiₓCo₁₋ₓO₂, LiNiₓCo_{y}Mn_{1-x-y}O₂, LiNiₓCo_{y}Al_{1-x-y}O₂, and a modified compound thereof; wherein 0<x<1, 0<y<1, and 0<x+y<1;
preferably, the positive active material is at least one of LiNiₓCo_{y}Mn_{1-x-y}O₂ and LiNiₓCo_{y}Al_{1-x-y}O₂; wherein 0.6≤x<1, 0<y<0.4, and 0<x+y<1.

8. A method for preparing the positive electrode for a lithium battery according to any one of claims 1-7, **characterized in that** the method comprises the following steps:
(1) mixing a positive electrode active material, a conductive agent, a binder and an oxide solid state electrolyte to make a positive electrode slurry; and mixing a monomer for polymerization, an initiator, a lithium salt and an organic solvent to prepare a precursor solution for polymerization;
(2) coating the positive electrode slurry on a current collector, and drying it to obtain a positive electrode; and
(3) infiltrating the above positive electrode with the precursor solution for polymerization to initiate a polymerization reaction to obtain a positive electrode product.

9. A semi-solid state battery, **characterized in that** the semi-solid state battery comprises the positive electrode for a lithium battery according to any one of claims 1-7.

10. A method for preparing the semi-solid state battery according to claim 9, **characterized in that** the method comprises the steps of:
(1) mixing a positive electrode active material, a conductive agent, a binder and an oxide solid state electrolyte to make a positive electrode slurry; and mixing a monomer for polymerization, an initiator, a lithium salt and an organic solvent to prepare a precursor solution for polymerization;
(2) coating the positive electrode slurry on a current collector, and drying it to obtain a positive electrode; and
(3) assembling the positive electrode, a negative plate and a separator, and then injecting the precursor solution for polymerization and an electrolyte to infiltrate the positive electrode to initiate a polymerization reaction, thereby obtaining a semi-solid state battery.
